# EUROPÄISCHE PATENTANMELDUNG

(11) **EP 0 868 935 A1**
(43) Veröffentlichungstag der Anmeldung: **07.10.1998**
(21) Anmeldenummer: 98103887.0
(22) Anmeldetag: 05.03.1998
(51) Int. Cl.: B01D 46/30, B01D 53/04, B01J 20/20, A47L 9/12

(54) **Luftfilter, insbesondere für staubbeladene Luft eines Staubsaugers**

(30) Priorität: 06.03.1997 DE 19709061
(71) Anmelder: Vorwerk & Co. Interholding GmbH, 42275 Wuppertal (DE)
(72) Erfinder: Krapp, Jan Thomas, 42399 Wuppertal (DE)
(74) Vertreter: Müller, Enno, Dipl.-Ing.

(57) **Zusammenfassung**

Die Erfindung betrifft einen Luftfilter (4), insbesondere für staubbeladene Luft eines Staubsaugers (1) auf Basis von Aktivkohle. Um einen Luftfilter der in Rede stehenden Art derart verbessert auszugestalten, daß der qualitativ unangenehme Charakter der aus dem Luftfilter noch austretenden Geruchsstoffe positiv beeinflußt wird, wird vorgeschlagen, daß in dem Filter (4) unterschiedliche Arten von Aktivkohle enthalten sind derart, daß das Adsorptions-Spektrum hinsichtlich bestimmter Geruchsstoffe unterschiedlich ist.

## Beschreibung

Die Erfindung betrifft einen Luftfilter, insbesondere für staubbeladene Luft eines Staubsaugers, auf Basis von Aktivkohle.

Derartige Luftfilter sind in verschiedenen Ausführungen bekannt. Beispielsweise werden solche Luftfilter in dem einem Staubfilterbeutel nachgeordneten Strömungskanalbereich eines Staubsaugers eingesetzt, zur Adsorption von Geruchsstoffen. Letztere werden durch Anlagerungen an Festkörperoberflächen abgeschieden. Ein effektives Geruchsfilter besitzt daher eine möglichst große innere Oberfläche, wozu als geruchsadsorbierende Substanzen hochporöse Materialen wie Zeolithe oder Aktivkohle eingesetzt wird. Die innere Oberfläche dieser Materialen ist durch Poren und Kanäle mit dem filteräußeren Raum verbunden. In Richtung kleiner werdenden Durchmessers spricht man von Makro-, Meso- und Mikroporen. Um ein Zusetzen letzterer durch bspw. Staub unterschiedlicher Größenordnungen zu verhindern, ist es bspw. aus einer nicht vorveröffentlichten deutschen Patentanmeldung der Anmelderin mit dem Aktenzeichen 19 612 937 bekannt einem solchen Luftfilter einen Partikelfilter vorzuschalten. Bei den in einem Staubsauger vorherrschenden transportierten Luftmengen auf der einen Seite und dem für ein Filter zur Verfügung stehenden Bauraum, der prinzipbedingt klein gegen das Volumen des gesamten Staubsaugers ist, andererseits, ist eine vollständige Abtrennung sämtlicher Geruchsstoffe nicht möglich. Der Anteil der Geruchsstoffe wird vom Geruchsfilter bestimmungsgemäß lediglich unter eine individuell verschiedene Geruchsschwelle gesenkt. Da diese Geruchsschwelle bei einzelnen Menschen stark schwankt, ist es vielen möglich trotz Geruchsfilter heim Staubsaugen den typischen Staubsaugergeruch wahrzunehmen. Da letzterer nur abgeschwächt wird, ändert sich nur die Stärke der Belastung, der Geruch als solcher wird jedoch zumeist noch immer wahrgenommen und dann immer noch qualitativ als unangenehm empfunden.

Im Hinblick auf den vorbeschriebenen Stand der Technik wird eine technische Problematik der Erfindung darin gesehen, einen Luftfilter der in Rede stehenden Art derart verbessert auszugestalten, daß der qualitativ unangenehme Charakter der aus dem Luftfilter noch austretenden Geruchsstoffe positiv beeinflußt wird.

Diese Problematik ist zunächst und im wesentlichen beim Gegenstand des Anspruchs 1 gelöst, wobei darauf abgestellt ist, daß in dem Filter unterschiedliche Arten von Aktivkohle enthalten sind derart, daß das Adsorptions-Spektrum hinsichtlich bestimmter Geruchsstoffe unterschiedlich ist. Hierzu kann bspw. ein aus einem offenporigen, retikulierten Mischschaum aus z. B. Polyesterpolyurethan, an dessen Wänden Aktivkohle angehaftet sind, zur Verwendung kommen. Weiter kann die Aktivkohle als Kugel- oder Bruchkohle gebildet sein. Durch die erfindungsgemäße Ausgestaltung ist es insbesondere im Hinblick auf einen Einsatz in einem Staubsauger ermöglicht, den qualitativen Charakter des Staubsaugergeruches positiv zu verbessern. Statt den unangenehmen Geruch lediglich in seiner Stärke zu reduzieren wird durch die Auswahl des filternden porösen Materials gleichzeitig oder auch bevorzugt der noch wahrzunehmende Geruch . So ist bspw. vorgesehen, daß in dem Luftfilter unterschiedliche Arten von Aktivkohle vorgesehen sind, zur wesentlichen Adsorption des als unangenehm empfundenen Staubsaugergeruches bei gleichzeitigem Durchlaß, ggf. in abgeschwächter Form, von als angenehm empfundenen Geruchsstoffen. Der als unangenehm empfundene Staubsaugergeruch wird hierbei nicht nur in seiner Stärke reduziert, sondern auch von den bewußt durchgelassenen Geruchsstoffen anderer Art überlagert, so daß für den Benutzer der typische Staubsaugergeruch nicht mehr wahrnehmbar ist. Aufgrund unterschiedlicher physikochemischer Eigenschaften, wie z.B. der Verteilung von Makro-, Meso- und Mikroporen besitzen unterschiedliche Kohlen eine unterschiedliche relative Wirkung auf verschiedene Geruchsstoffe. So zeigt sich bspw., daß Aktivkohlen, die eine vergleichbare Abscheideleistung hinsichtlich des unpolaren Geruchsstoffes n-Butan aufweisen, sich hinsichtlich der Abscheidung eines polaren Geruchsstoffes, wie bspw. Schwefeldioxid, deutlich unterscheiden. Es ist somit möglich, den Geruch von Hausstaub, der aus einer Vielzahl verschiedener Geruchsstoffe mit unterschiedlichen physikochemischen Eigenschaften besteht, durch die Auswahl von Kohle, neben Parametern wie Kohlemenge im Filter, Verweilzeit der Luft im Filter, mittlere Stoßzahl eines Gaspartikels mit einer direkten Oberfläche der Kohle bezogen auf die unterschiedlichen Strömungspfade der durch das Filter hindurchtretenden Luft, nicht nur in seiner Geruchsstärke zu beeinflussen, sondern auch in seiner sogenannten hedonischen Geruchswirkung, also der Stärke des positiven, neutralen oder negativen Empfindens, das den Geruch auslöst, zu beeinflussen. Ein solches Filter kann bei Verwendung in einem Staubsauger einer Motor-Gebläseeinheit nachgeschaltet positioniert sein. Dies hat jedoch den wesentlichen Nachteil, daß die Luft durch die Motor-Gebläseeinheit erwärmt wird, wodurch sich das Adsorptions-Desorptionsgleichgewicht nachteilig verschiebt. Dies bedeutet, daß das Filter weniger Geruchsstoffe aus dem erwärmten Luftstrom abtrennen kann als bei nicht erwärmter Luft. Weiter nachteilig ist, daß das Filter durch die Motor-Gebläseeinheit räumlich deutlich weiter von einem Staubfilterbeutel oder einem vergleichbaren Grobstaubabscheider entfernt ist. In letzterem wird jedoch durch den mikrobiologischen Abbau von Sauggut ein Großteil der abzuscheidenden Geruchsstoffe produziert. Ist das Geruchsfilter nun fern dem Grobstaubabscheider angeordnet, so können Geruchsstoffe ohne aktiven Transport durch das Staubsaugergebläse durch Diffusion nur schwer das Geruchsfilter erreichen, so daß während der Stillstandzeiten sich eine hohe Konzentration von Geruchsstoffen im Grobstaubabscheider bilden kann. Aufgrund der zuvorbeschriebenen Nachteile wird bevorzugt das Filter der Motor-Gebläseeinheit vorgeschaltet angeordnet, d.h. im Strömungsbereich zwischen Grobstaubabscheider (Staubfilterbeutel) und Motor-Gebläseeinheit. Dies hat den vorteilhaften Effekt, daß die zu filternde Luft nicht erwärmt wird. Weiter können die in dem Grobstaubabscheider entstehenden Geruchsstoffe durch Diffusion das Filter erreichen. Alternativ kann vorgesehen sein, daß die Aktivkohle hinsichtlich der Ausfilterung von bestimmten Geruchsstoffen bei weitestgehendem Durchlaß für andere Geruchsstoffe ausgewählt ist. Das Filter ist derart ausgebildet, daß nicht nur quantitativ die Konzentration der sehr vielfältigen Luftinhaltsstoffe der Ausblasluft eines Staubsaugers oder dergleichen, die als typischer Staubsaugergeruch empfunden werden, reduziert werden, sondern das darüber hinaus auch selektiv einem invertiertem Bandpassfilter gleich einige dieser Luftinhaltsstoffe präferentiell gefiltert werden. Durch die Auswahl und Zusammensetzung des adsorptiven Materials im Filter wird eine Steuerung erreicht. Durch die Steuerung dieser Selektion ist ein Geruchsdesign ermöglicht. Der Geruch nimmt nicht nur in seiner Intensität ab, sondern es wird zusätzlich der Restgeruch qualitativ als wesentlich angenehmer empfunden als der ursprüngliche typische Staubsaugergeruch. In einer vorteilhaften Weiterbildung des Erfindungsgegenstandes ist vorgesehen, daß die Aktivkohle zur selektiven Adsorption eines Geruchsstoffes / von Geruchsstoffen chemisch ausgerüstet ist. Hierzu wird bspw. vorgeschlagen, daß die chemische Ausrüstung ein Silberoxid ist. Durch diese chemische Ausrüstung wird subjektiv das beschriebene Ziel erreicht. Hierzu ist weiter vorgesehen, daß das Ausrüstungsmaterial der Aktivkohle beigemengt ist. Bevorzugt wird hierbei eine Ausgestaltung, bei welcher das Ausrüstungsmaterial in Gewichtsanteilen von 0,05 % bis 0,5 % beigemengt ist.

Die Erfindung ist nachstehend anhand der Zeichnungen, welche lediglich ein Ausführungsbeispiel darstellen, erläutert. Hierbei zeigt:
- Fig. 1: einen Staubsauger in einer perspektivischen Darstellung mit in verdeckter Linienart dargestellter Lage eines Luftfilters und eines Sauggebläses;
- Fig. 2: einen Querschnitt durch einen den Luftfilter aufnehmenden Bereich des Staubsaugers;
- Fig. 3: eine Schnittdarstellung eines vergrößert wiedergegebenen Bereichs des Luftfilters;
- Fig. 4: ein schematisches Diagramm bezüglich Standartabweichungen der Abscheideleistung eines Luftfilters bei Einsatz verschiedener Kohlen und bei Filterung verschiedener Geruchsstoffe.

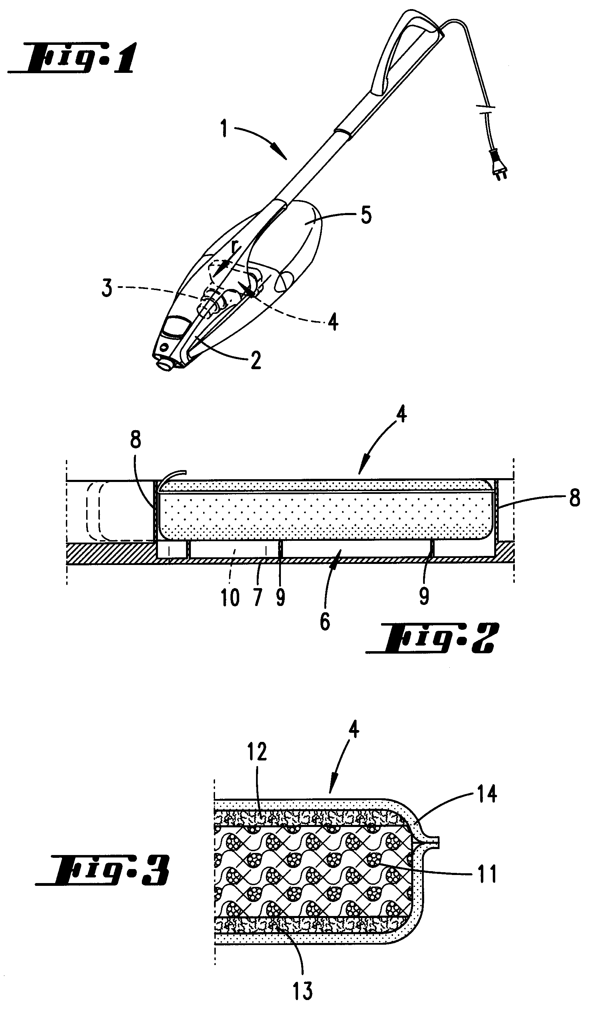

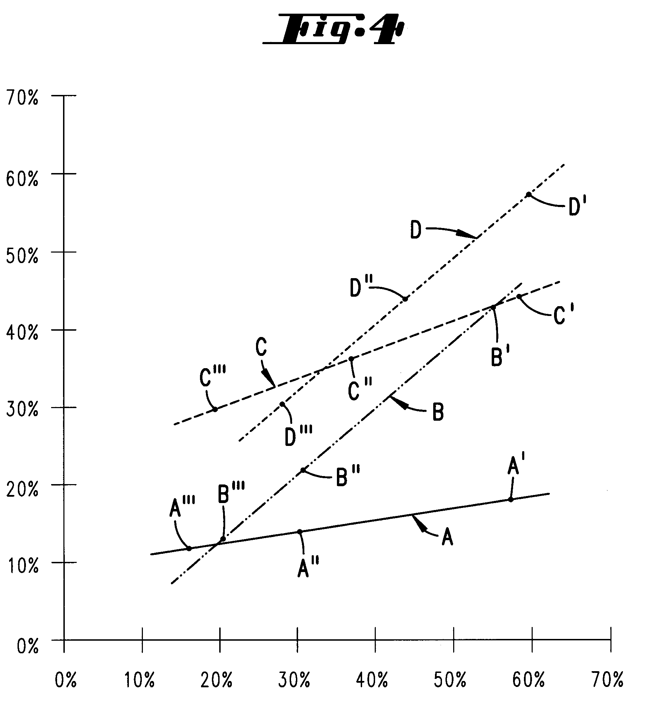

Dargestellt und beschrieben ist zunächst mit Bezug zu Fig. 1 ein Staubsauger 1 mit einem in einem Staubsaugergehäuse 2 angeordneten Sauggebläse 3 und einem in Strömungsrichtung r vor dem Sauggebläse 3 angeordneten Luftfilter 4. Weiter ist in Strömungsrichtung r diesem Luftfilter 4 ein in einer Filterbeutelkassette 5 gehalterter, nicht dargestellter Staubfilterbeutel vorgeschaltet.

Eine derartige Konstellation ist aus der eingangs erwähnten, nicht vorveröffentlichten deutschen Patentanmeldung mit dem Aktenzeichen 196 12 937 der Anmelderin bekannt. Der Inhalt dieser Patentanmeldung wird hiermit vollinhaltlich in die Offenbarung vorliegender Erfindung mit einbezogen, auch zu dem Zwecke, Merkmale dieser Anmeldung in Ansprüche vorliegender Erfindung mit einzubeziehen.

In dem Staubsaugergehäuse 2 ist dem Sauggebläse 3 vorgeschaltet eine Aufnahme 6 für das Luftfilter 4 ausgebildet. In dieser Aufnahme 6 liegt im Betriebszustand das Luftfilter 4 ein. Zur Entnahme des Luftfilters 4 ist die Aufnahme 6 freilegbar, indem die Staubbeutelkassette 5 von dem Sauggehäuse 2 abgeschwenkt wird.

Die Aufnahme 6 ist im wesentlichen schalenförmig ausgebildet mit einem Boden 7 und einer senkrecht zu diesem ausgerichteten, umlaufenden Wandung 8. Auf dem Boden 7 sind Stege 9 angeformt zum Abstützen des einzulegenden Luftfilters 4, wodurch eine Beabstandung zwischen der Unterseite des Luftfilters 4 und dem Boden 7 gegeben ist.

Weiter ist in dem Boden 7 eine Saugöffnung 10 zum Anschluß an das Sauggebläse 3 vorgesehen.

Wie insbesondere aus der Schnittdarstellung in Fig. 3 zu erkennen, ist eine schichtweise Anordnung verschiedener Filterlagen vorgesehen. Zur Adsorbierung von Gerüchen ist eine Geruchsfilterschicht 11 vorgesehen, welche in Durchströmungsrichtung r zwischen zwei Partikelfilterschichten 12 und 13 angeordnet ist.

Zur Filtrierung von Feinststaub, der noch aus dem Staubfilterbeutel austreten kann, ist die, einen Porenschutzfilter bildende Partikelfilterschicht 12 aus einem Vliesstoff hergestellt. Es kann jedoch auch ein Glaspapierfilterstoff zur Anwendung kommen.

Es ist so ein dreilagiges Luftfilter 4 geschaffen, welches von einem hautartigen Schaumstoff 14 zur Bildung einer Hülle umgeben ist.

Die Geruchsfilterschicht 11 besteht bevorzugt aus einem Schaumstoffgerüst mit eingelagerter Aktivkohle. Hier wird bevorzugt aktive Bruchkohle eingesetzt. Es sind jedoch auch andere Ausführungen von aktivierter Kohle denkbar.

Die gewählte Kohle ist durch eine chemische Ausrüstung behandelt. Hier wird bevorzugt der Kohle ein Silberoxid in Gewichtsanteilen von 0,05 % bis 0,5 % beigemengt.

Durch die geeignete Auswahl bzw. Behandlung des filtrierenden porösen Materials wird nicht nur der unangenehme Geruch lediglich in seiner Stärke reduziert, sondern auch gleichzeitig der qualitativ unangenehme Charakter des Staubsaugergeruches positiv beeinflußt.

In dem gezeigten Ausführungsbeispiel ist eine Geruchsfilterschicht 11 vorgesehen, welche Aktivkohle aufweist, die hinsichtlich der Ausfiltrierung von bestimmten Geruchsstoffen bei weitestgehendem Durchlaß für andere Geruchsstoffe ausgewählt ist. Es ist jedoch auch eine Ausbildung denkbar, bei welcher in dem Filter unterschiedliche Arten von Aktivkohle enthalten sind derart, daß das Adsorptions-Spektrum hinsichtlich bestimmter Geruchsstoffe unterschiedlich ist.

Unterschiedliche Kohlen besitzen aufgrund unterschiedlicher physikochemischer Eigenschaften, wie z.B. der Verteilung von Makro-, Meso- und Mikroporen eine unterschiedliche relative Wirkung auf verschiedene Geruchsstoffe. Eine beispielhafte meßtechnische Analyse hierfür ist in der in Fig. 4 dargestellten Grafik wiedergegeben, wobei zu vier verschiedenen Kohlen A - D arithmetisch gemittelte Kennlinien gezeigt sind.

Auf der Abszisse sind in Prozent die Abscheideleistungen hinsichtlich eines unpolaren Geruchsstoffes n-Butan und auf der Ordinate die Abscheideleistungen hinsichtlich eines polaren Geruchsstoffes Schwefeldioxid abzulesen. Die Messungen wurden in Zeitabständen von 1,5, 5 und 10 Minuten durchgeführt, wobei die jeweiligen gemessenen Resultate in den jeweiligen Kennlinien mit A', A'', A''' bis D', D'', D''' gekennzeichnet sind.

Aus dem Diagramm in Fig. 4 ist zu erkennen, daß Aktivkohlen, die eine vergleichbare Abscheideleistung hinsichtlich des unpolaren Geruchsstoffes n-Butan aufweisen, sich hinsichtlich der Abscheidung des polaren Geruchsstoffes Schwefeldioxid deutlich unterscheiden. So beträgt die Standartabweichung der Abscheideleistung beim unpolaren Geruchsstoff n-Butan nach 1,5 Minuten der vier Kohletypen bezogen auf ihren Mittelwert ca. 4 %, hingegen die Standartabweichung der Abscheideleistung bei Abscheidung des polaren Geruchsstoffes Schwefeldioxid, bezogen auf den Mittelwert ca. 40 %.

Es ergibt sich somit die Möglichkeit den Geruch von Hausstaub, der aus einer Vielzahl verschiedener Geruchsstoffe mit unterschiedlichen physikochemischen Eigenschaften besteht, durch die Auswahl von Kohle, neben Parametern wie Kohlemenge im Filter, Verweilzeit der Luft im Filter, mittlere Stoßzahl eines Gaspartikels mit der direkten Oberfläche der Kohle, bezogen auf die unterschiedlichen Strömungspfade der durch das Filter hindurchtretenden Luft, nicht nur in seiner Geruchsstärke zu beeinflussen, sondern auch in seiner sogenannten hedonischen Geruchswirkung, also der Stärke des positiven, neutralen oder negativen Empfindens, welches der Geruch auslöst, zu beeinflussen.

Es wird somit nicht nur quantitativ die Konzentration der sehr vielfältigen Luftinhaltsstoffe der Ausblasluft eines Staubsaugers, die als typischer Staubsaugergeruch empfunden wird reduziert, sondern darüber hinaus auch selektiv einem invertierten Bandpassfilter gleich einige dieser Luftinhaltsstoffe präferentiell gefiltert. Durch die Steuerung über die Auswahl und Zusammensetzung des adsorptiven Materials im Filter ist ein Geruchsdesign ermöglicht. Der Geruch nimmt nicht nur in seiner Intensität ab, sondern zusätzlich wird der Restgeruch qualitativ auch als wesentlich angenehmer empfunden als der ursprüngliche typische Staubsaugergeruch.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Luftfilter (4), insbesondere für staubbeladene Luft eines Staubsaugers (1) auf Basis von Aktivkohle, dadurch gekennzeichnet, daß in dem Filter (4) unterschiedliche Arten von Aktivkohle enthalten sind derart, daß das Adsorptions-Spektrum hinsichtlich bestimmter Geruchsstoffe unterschiedlich ist.

2. Luftfilter (4) nach Anspruch 1 oder insbesondere danach, dadurch gekennzeichnet, daß die Aktivkohle hinsichtlich der Ausfilterung von bestimmten Geruchsstoffen bei weitestgehendem Durchlaß für andere Geruchsstoffe ausgewählt ist.

3. Luftfilter (4) nach einem oder mehreren der vorhergehenden Ansprüche oder insbesondere danach, dadurch gekennzeichnet, daß die Aktivkohle zur selektiven Adsorption eines Geruchsstoffes / von Geruchsstoffen chemisch ausgerüstet ist.

4. Luftfilter (4) nach einem oder mehreren der vorhergehenden Ansprüche oder insbesondere danach, dadurch gekennzeichnet, daß die chemische Ausrüstung ein Silberoxid ist.

5. Luftfilter (4) nach einem oder mehreren der vorhergehenden Ansprüche oder insbesondere danach, dadurch gekennzeichnet, daß das Ausrüstungsmaterial der Aktivkohle beigemengt ist.

6. Luftfilter (4) nach einem oder mehreren der vorhergehenden Ansprüche oder insbesondere danach, dadurch gekennzeichnet, daß das Ausrüstungsmaterial in Gewichtanteilen von 0,05 % bis 0,5 % beigemengt ist.
